## Europäisches Patentamt

## European Patent Office

## Office européen des brevets

(11) Veröffentlichungsnummer: **0 259 590**
**B1**

(12) **EUROPÄISCHE PATENTSCHRIFT**

(45) Veröffentlichungstag der Patentschrift:
**04.10.89**

(51) Int. Cl.⁴: **F16H 39/22**

(21) Anmeldenummer: **87110816.3**

(22) Anmeldetag: **25.07.87**

(54) **Regelbarer hydrostatischer Antrieb.**

(30) Priorität: **08.09.86 DE 3630514**

(43) Veröffentlichungstag der Anmeldung:
**16.03.88 Patentblatt 88/11**

(45) Bekanntmachung des Hinweises auf die Patenterteilung:
**04.10.89 Patentblatt 89/40**

(84) Benannte Vertragsstaaten:
**DE FR GB IT SE**

(56) Entgegenhaltungen:
**AT-B- 153 421**
**AU-B- 35 027**
**DE-A- 1 962 613**
**DE-C- 403 969**
**US-A- 2 434 546**

(73) Patentinhaber: **PIERBURG GMBH, Leuschstrasse 1,
D-4040 Neuss 1(DE)**

(72) Erfinder: **Baumgartner, Hans, Grüner Weg 37,
D-4060 Viersen 12(DE)**

(74) Vertreter: **Bergen, Klaus, Dipl.-Ing. et al, Patentanwälte
Dr.-Ing. Reimar König Dipl.-Ing. Klaus Bergen
Wilhelm-Tell-Strasse 14 Postfach 260162,
D-4000 Düsseldorf 1(DE)**

ACTORUM AG

## Beschreibung

Die Erfindung betrifft einen regelbaren hydrostatischen Antrieb, insbesondere für die Nebenaggregate von Kraftfahrzeug-Brennkraftmaschinen, bestehend aus einer einen zwischengeschalteten exzentrischen Verstellring aufweisenden, in einem gemeinsamen Gehäuse radial ineinandergebauten Pumpen-/Motoreinheit mit gegensinnig einstellbarem Fördervolumen von Pumpe und Motor, die strömungstechnisch miteinander verbunden sind.

Brennkraftmaschinen, insbesondere die Antriebsmotoren von Kraftfahrzeugen, müssen in Nebentrieben Aggregate antreiben, die entweder dem Betrieb der Brennkraftmaschine selbst oder anderen Zwecken dienen. Dem Betrieb der Brennkraftmaschine selbst dienen zum Beispiel Wasserpumpe, Lüfter, Lichtmaschine und Schmierölpumpe. Für andere Zwecke gibt es beispielsweise Ölpumpen für Servolenkung, Niveauregulierung und Komforthydraulik, Kompressoren für Klimaanlage und Luftfederung. Die Leistungen der Aggregate sollen auch bei Leerlaufdrehzahl der Brennkraftsmachine ausreichend sein. Von diesen Aggregaten benötigen einige ständig ihre drehzahlabhängige volle Leistung, zum Beispiel die Wasser- und die Schmierölpumpe; andere Aggregate, wie beispielsweise eine Lichtmaschine und ein Lüfter mit Viskositätskupplung, entnehmen eine geregelte Leistung und wieder andere Aggregate werden zeitweise mit Nennleistung betrieben und dann auf Leerlaufleistung abgeschaltet, wie beispielsweise Kompressoren für eine Klimaanlage und die Luftfederung.

Es ist bekannt, daß alle Aggregate mit ihrer maximalen Leistung zugeschaltet sind. Die Summe der Leistungen kann dann einen solchen Wert annehmen, daß die geforderte Leerlaufleistung der Brennkraftmaschine, insbesondere bei Maschinen mit kleinem Volumen, nur durch eine erhöhte Leerlaufdrehzahl möglich ist. Eine höhere Leerlaufdrehzahl ist allerdings deshalb unerwünscht, weil sich die Geräuschbildung erhöht, bei Verwendung hydrodynamischer Wandler oder Kupplungen das Kriechmoment und die Schlupfwärme größer sowie der Kraftstoffverbrauch und die Gesamtumdrehungen erhöht werden.

Damit sich die Nebenaggregate im unteren Drehzahlbereich der Brennkraftmaschine besser versorgen lassen, ohne übermäßige Verluste in hohen Drehzahlbereichen hinnehmen zu müssen, sind hydrostatische Getriebe und hydraulische Umwandler bestehend aus einer Pumpe und einem Motor bekannt. Mit diesen Antrieben bzw. Umwandlern läßt sich die für die Nebenaggregate benötigte Drehzahl durch Verändern des Fördervolumens des die Nebenaggregate antreibenden Motors gegenüber dem Fördervolumen der mit der Drehzahl der Brennkraftmaschine umlaufenden Pumpe erreichen.

Bei einem aus der DE-OS 19 62 613 bekannten hydrostatischen Getriebe der eingangs genannten Art sind Pumpe und Motor als Flügelzellenmaschinen ausgebildet und radial ineinander eingesetzt. Zwischen der als Motor dienenden äußeren Flügelzellenmaschine und der als Pumpe dienenden inneren Flügelzellenmaschine ist ein exzentrischer Verstellring angeordnet, mit dessen Außenseite die Flügel des Motors und mit dessen Innenseite die Flügel der Pumpe zusammenwirken. Je nach der Einstellage des dem Motor und der Pumpe gemeinsamen exzentrischen Verstellringes läßt sich der Flüssigkeitsdurchsatz für den Antrieb des Rotors des Motors und damit auch das Fördervolumen durch die Flügel der Pumpe gegensinnig verändern, d.h. das Fördervolumen der Pumpe nimmt ab, während gleichzeitig das Fördervolumen des Motors zunimmt, und umgekehrt. Es wird jedoch nicht offenbart, wie das Verändern und Festlegen der Lage des Verstellrings und damit eine Drehzahlvariation erreicht wird.

Bei einer großen Spreizung der Drehzahlen, beispielsweise im Verhältnis 1:10 von Leerlauf- zu Maximaldrehzahl, wie sie bei einer angestrebten Leerlaufdrehzahl von 600 bis 650 U/min. und einer Maximaldrehzahl der Brennkraftmaschine von 7000 U/min. vorliegt, ist außerdem eine entsprechend große Exzentrizität, d.h. eine teilweise sehr dicke Wand des Verstellringes erforderlich. Bedingt durch diese Wanddicke des Verstellrings ist trotz der radialen Bauweise der Motor-/Pumpeneinheit das Bauvolumen des bekannten hydrostatischen Getriebes unerwünscht hoch.

Eine mit dem vorbeschriebenen hydrostatischen Getriebe vergleichbare und dieselben Nachteile aufweisende, radial ineinander eingebaute Pumpen-/Motoreinheit ist außerdem durch die US-PS 2 434 546 bekanntgeworden.

Der Erfindung liegt die Aufgabe zugrunde, einen hydrostatischen Antrieb mit radial ineinandergebauter Pumpen-/Motoreinheit, bei dem zwischen Pumpe und Motor ein exzentrischer Verstellring angeordnet ist, hinsichtlich der Drehzahlvariation zu verbessern.

Erfindungsgemäß wird diese Augabe dadurch gelöst, daß eine die Pumpen-/Motoreinheit antreibende Welle die Seitenscheiben des Gehäuses durchdringt und mit einem vorkragenden Ende in einer das Wellenende aufnehmenden, mit einem exzentrischen, sichelförmigen Bund in eine in Umfangsrichtung verlaufende Ausnehmung der Innenringfläche des Verstellrings eingreifenden Buchse umläuft, und daß eine die Wellenendenbuchse koaxial umschließende Außenbuchse mit einer Nase in eine radiale Nut des Verstellringes ragt. Damit läßt sich zur Drehzahlvariation sowohl das radiale Verstellen und das Verdrehen des Verstellringes um die Längsachse der Antriebswelle als auch das Festlegen der eingestellten Lage des Verstellrings durch einfaches Verschwenken eines Verstellhebels von außerhalb der regelbaren hyrostatischen Antriebseinheit durch eine Bedienungsperson vornehmen.

Die Nase (z.B. ein Finger, ein Stift oder ein anderer vorspringender Ansatz) läßt sich vorteilhaft an der Stirnfläche der Außenbuchse anordnen.

Bei einer Verdrehsicherung der Wellenendenbuchse und einem an der Außenbuchse befestigten Verstellhebel läßt sich ein Verdrehen des Verstellringes erreichen; denn die den exzentrischen, sichelförmigen Bund aufweisende Wellenendenbuchse wird in diesem Fall beim Verschwenken des Verstellhebels lagesicher, d.h. verdrehsicher durch die beispielsweise als Bügel oder Blech ausgebildete und am Motorgehäuse befestigte Verdrehsicherung festgehalten, während sich die Außenbuchse verdreht und über die in dem Verstellring eingreifende Nase den Verstellring mitnimmt.

Bei einer Verdrehsicherung der Außenbuchse und einem an der Wellenendenbuchse befestigten Verstellhebel läßt sich ein radiales Verstellen des Verstellringes bewirken; denn in diesem Fall wird die Außenbuchse von der Verdrehsicherung in ihrer Lage festgehalten. Wird der Verstellhebel verschwenkt, bewegt sich die Wellenendenbuchse auf dem vom sichelförmigen Bund gebildeten Exzenterkreis und hebt oder senkt den Verstellring. Dabei läßt sich bei einer Drehung der Wellenendenbuchse und damit des sichelförmigen Bundes ein radiales Verschieben des Verstellringes um das Maß der 2-fachen Exzentrizität erreichen.

Ein klein bauender und trotzdem sehr große Drehzahlübersetzungen erlaubender Kompaktantrieb einer radial ineinandergebauten Pumpen-/Motoreinheit läßt sich vorteilhaft durch einen zwischen der Pumpe und dem Motor angeordneten Verstellring mit entgegengesetzt exzentrischem Kurvenverlauf von Innen- und Außenringfläche erreichen. Während sich bei den bekannten Verstellringen die Exzentrizität gleich verhält, d.h. der außermittige Verlauf sowohl der Innen- als auch der Außenringfläche jeweils in derselben Richtung am größten ist, verhalten sich die Exzentrizitäten erfindungsgemäß genau entgegengesetzt. Beim Verdrehen oder radialen Verschieben des Verstellringes im Gehäuse verändert sich der radiale Abstand von Außen- und Innenringfläche zum Mittelpunkt eines Pumpenrades oder des Rotors eines Motors bzw. einer damit gekoppelten Antriebswelle in einem entsprechend vergrößerten Bereich, so daß sich das durch das gegensinnig einstellbare Fördervolumen von Pumpe und Motor verdoppelte Übersetzungsverhältnis noch weiter variieren läßt. Ob dabei das umhüllende, d.h. außenliegende Getriebeaggregat als Motor oder Pumpe wirkt, ist davon abhängig, ob die Pumpen-/Motoreinheit an einer treibenden Welle (z.B. Kurbelwelle) oder an einer getriebenen Welle (z.B. bei einem Klimakompressor) angeschlossen ist. Bei Anordnung auf der treibenden Welle wird der Motor das umhüllende Aggregat des Antriebs sein.

Die Erfindung wird nachfolgend anhand der in der Zeichnung dargestellten Ausführungsbeispiele näher erläutert. Es zeigen:

Fig. 1 eine radial ineinandergebaute Pumpen-/Motoreinheit bestehend aus einem eine Rollenzellenpumpe umhüllenden Rollenzellenmotor, im Längsschnitt;

Fig. 2 den Gegenstand gemäß Fig. 1 entlang der Linie II-II geschnitten;

Fig. 3 den Gegenstand gemäß Fig. 1 entlang der Linie III-III geschnitten; und

Fig. 4 eine andere Ausführung einer radial ineinandergebauten Pumpen-/Motoreinheit, bestehend aus einem äußeren, eine Rollenzellenpumpe umhüllende Rollenzellenmotor, im Längsschnitt.

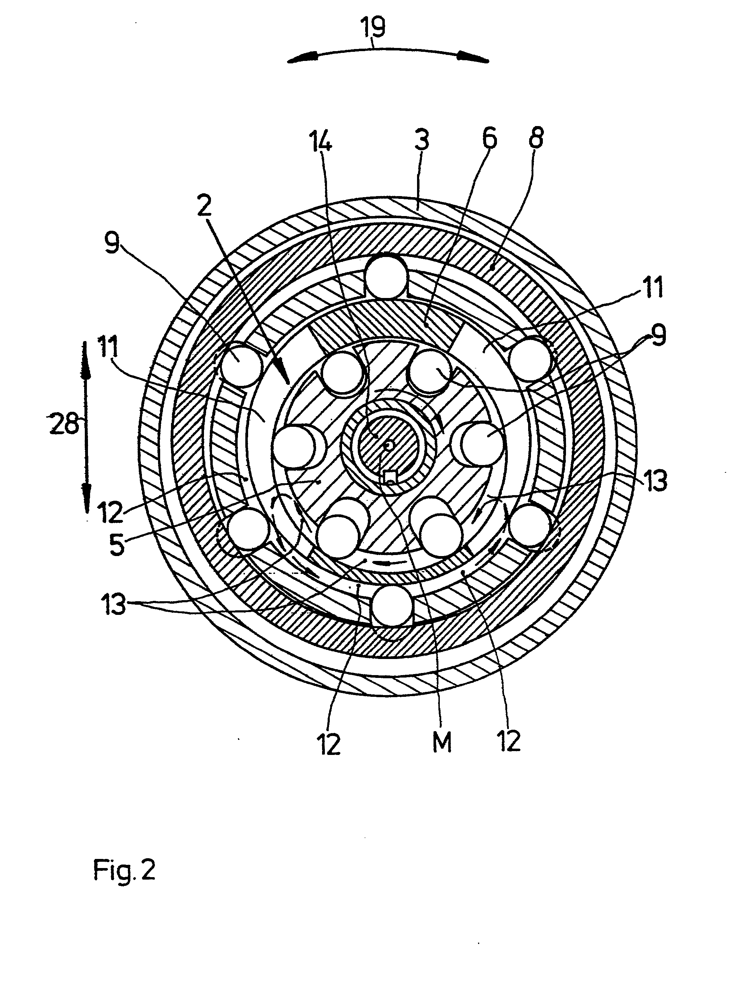

In einem Getriebegehäuse 1 lagern eine Rollenzellenpumpe 2 und ein Rollenzellenmotor 3; der Motor 3 und die Pumpe 2 sind radial ineinandergebaut, wobei der Motor 3 die Pumpe umhüllt. Zwischen einem mit der Drehzahl einer nicht dargestellten Brennkraftmaschine rotierenden Verdrängerkörper 4 des Motors 3 und einem Pumpenrad 5 der Rollenzellenpumpe 2 ist ein verstellbarer Ring 6 (Statorring) angeordnet. Der Verstellring 6 bildet mit seiner Außenringfläche 7 einerseits einen inneren Laufring für von äußeren Stützringen 8 eingeschlossene Rollen 9 des Motors 3 und nimmt weiterhin das zentrisch im Gehäuse 1 gelagerte Pumpenrad 5 des Motors auf; im Pumpenrad 5 angeordnete Rollen 9 der Rollenzellenpumpe 2 legen sich gegen die Innenringfläche 10 des Verstellringes 6. Der Verstellring 6 weist Schlitze bzw. Kanäle 11 auf, die von den Rollen 9 begrenzte Kammern 12 des Rollenzellenmotors 3 mit von den Rollen 9 der Rollenzellenpumpe 2 eingeschlossene Kammern 13 verbinden (vgl. Fig. 2). Die Pumpen-/Motoreinheit 2, 3 lagert auf einer Antriebswelle 14, vorzugsweise die Kurbelwelle einer nicht dargestellten Brennkraftmaschine, wobei das Treibmedium über einen zentrischen Zulauf 15 der Antriebswelle 14 einströmt und sich danach über die Kanäle 11 in die Kammern 12, 13 zwischen den Rollen 9 des Motors 3 und der Pumpe 2 verteilt; nach verrichteter Arbeit strömt das Treimedium über Rücklaufleitungen 16 ab und tritt dann erneut in den Kreislauf ein (vgl. die nicht bezifferten Strömungspfeile in den Kammern 12, 13 von Fig. 2).

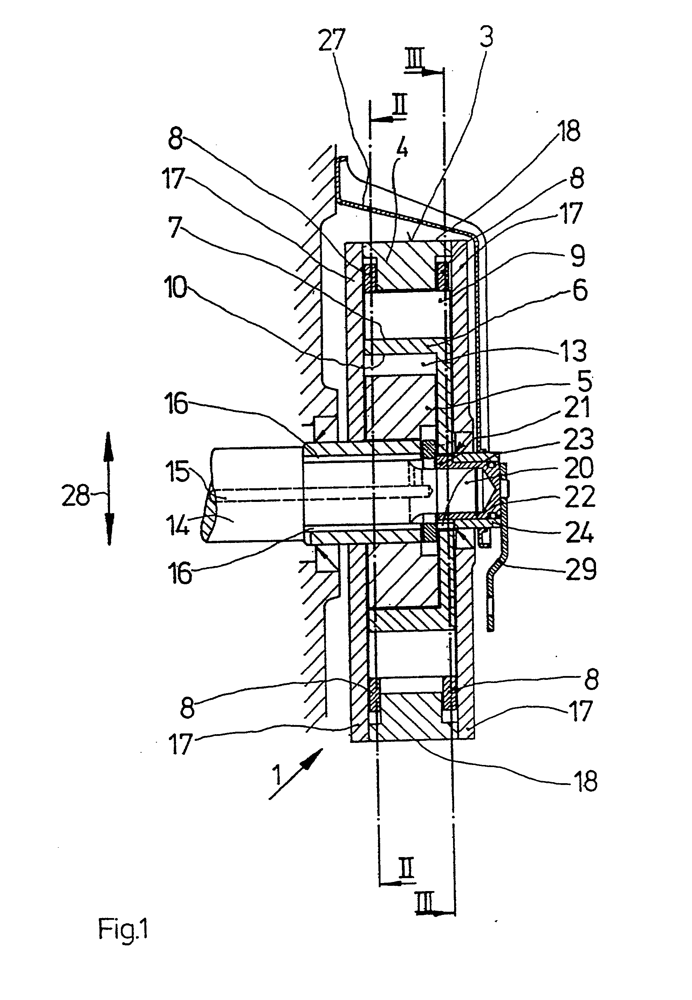

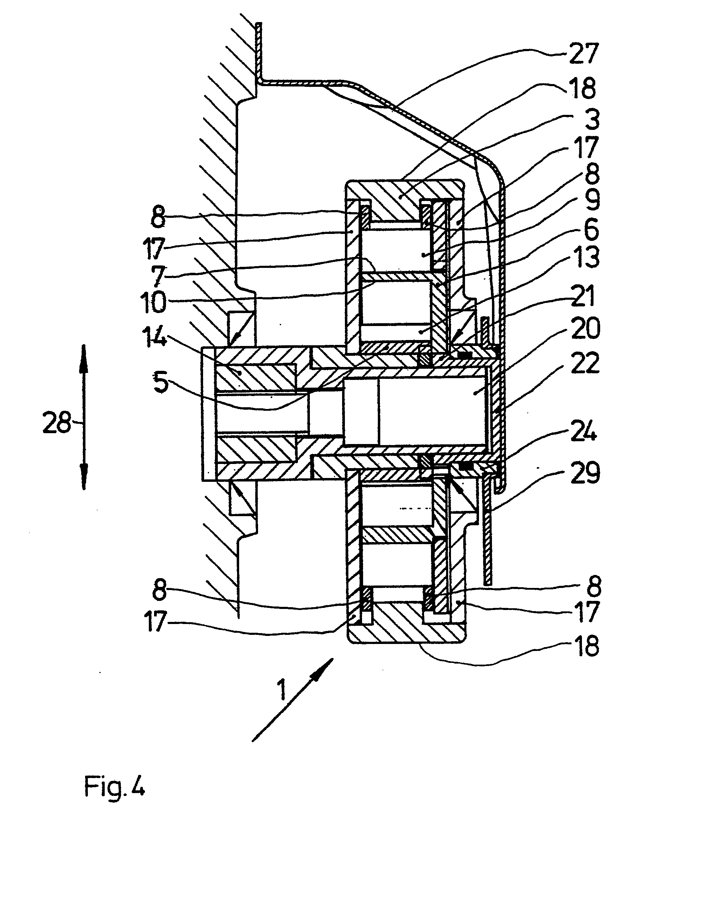

Die Gehäuse 1 der in den Fig. 1 und 4 dargestellten Pumpen-/Motoreinheiten 2, 3 bilden zusammen mit Seitenscheiben 17 ein auf der Kurbelwelle 14 befestigtes, sich um das Pumpenrad drehendes, außen eine Riemenebene 18 zur Verfügung stellendes Gehäuse, über die sich mittels eines Riemens die variable Drehzahl an die Nebenaggregate weiterleiten läßt.

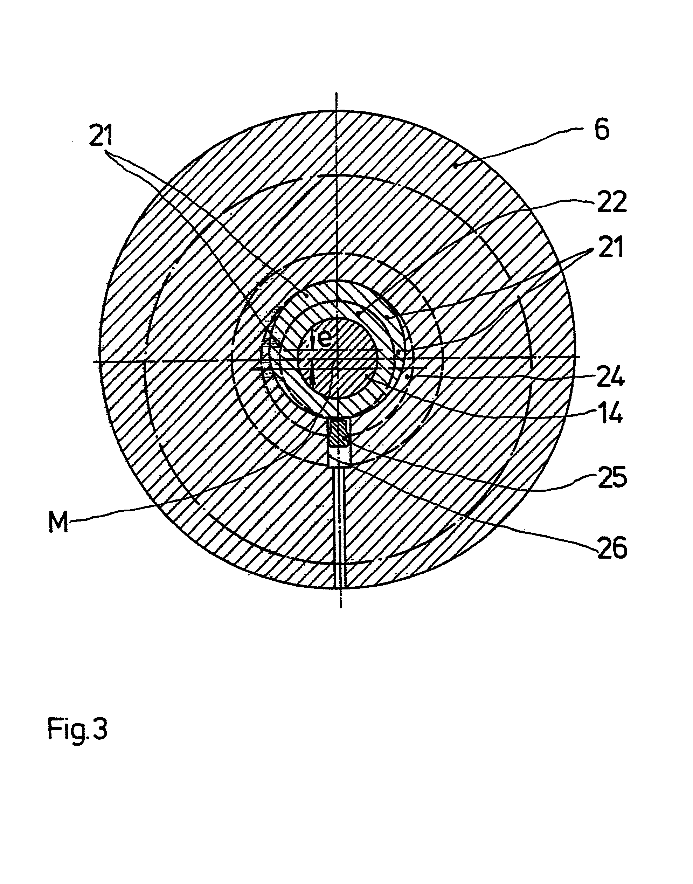

Das Übersetzungsverhältnis von Pumpendrehzahl zu Motordrehzahl der hydrostatischen Antriebseinheit 2, 3 wird bei der Ausführung gemäß Fig. 3 durch Verstellen des Ringes 6 in Pfeilrichtung 19 (Fig. 2), d.h. durch Verdrehen im Uhrzeigersinn um das zentrisch im Gehäuse 1 gelagerte Pumpenrad 5 der Pumpe 2 herum, oder auch im Gegenuhrzeigersinn, an die jeweilige Lastbedingung angepaßt. Damit sich der Ring 6 verdrehen läßt, durchdringt die die Antriebseinheit 2, 3 antreibende Welle 14 die Seitenscheiben 17 und läuft mit einem vorkragenden Wellenende 20 in einer einen exzentrischen, sichelförmigen Bund 21 aufweisenden Wellenendenbuchse 22. Der sichelförmige Bund 21 greift in eine in Umfangsrichtung verlaufende Ausnehmung 23 der Innenringfläche 10 des Verstellrings ein. Auf dem nicht mit dem sichelförmigen Bund 21 versehenen Abschnitt der Wellenendenbuchse 22 ist eine Außenbuchse 24 angeordnet, die mit einer an der Stirnfläche vorkragenden Nase 25 in eine radiale Nut 26 des Verstellrings 6 ragt (Fig. 3). Die Außenbuchse 24 ist gemäß Fig. 1 mittels einer an einem lediglich auszugsweise dargestellten Block einer Brennkraftmaschine befestigten Verdrehsicherung 27 festgelegt, so daß sich die Antriebseinheit 2, 3 bei der Ausführung gemäß Fig. 1 gemäß Pfeil 28 radial entweder nach oben oder nach unten verstellen läßt; und zwar dann, wenn ein an der Wellenendenbuchse 22 befestigter Verstellhebel 29 verschwenkt wird. Da nämlich die Außenbuchse 24 von der Verdrehsicherung 27 in ihrer Lage gehalten wird, verstellt sich bei der Betätigung des Hebels 29 die Wellenendenbuchse 22 um den Wellenzapfen 20, wobei sich der sichelförmige Bund 21 in der Ausnehmung 23 der Innenringfläche 10 des Verstellrings aus der in den Fig. 2 und 3 dargestellten angehobenen Position bis eine gegebenenfalls um 180° gedrehte Position verändert, d.h. senkt. Bei einer 180°-Drehung der Wellenendenbuchse 22 ergibt sich eine radiale Verschiebung des Verstellringes 6 um den zweifachen Betrag der Exzentrizität e.

Bei der in Fig. 4 dargestellten Ausführung der Antriebseinheit 2, 3 ist nicht wie bei der Ausführung gemäß Fig. 1 die Außenbuchse 24, sondern die Wellenendenbuchse 22 festgelegt, und der Verstellhebel 29 ist an der Außenbuchse 24 befestigt. Beim Verschwenken des Verstellhebels 29 läßt sich die Antriebseinheit 2, 3 in Pfeilrichtung 19 (Fig. 2) verdrehen; denn während sich die Außenbuchse 24 verdreht und mit der in die Nut 26 des Verstellringes 6 eingreifenden Nase 25 den Verstellring 6 ebenfalls in Pfeilrichtung 19 verdreht, wird die Wellenendenbuchse 22 von der Verdrehsicherung 27 in ihrer Lage gehalten.

Zum Verändern der Menge des Treibmediums und damit der Drehzahl der rotierenden Riemenebene 18 läßt sich der unterschiedlich dicke, entgegengesetzt exzentrische Verstellring 6 folglich um seine Längsachse verdrehen (vgl. Pfeil 19), und alternativ in radialer Ebene nach oben oder nach unten verschieben (vgl. Pfeil 28) und damit das Maß der größten Exzentrizität - ausgehend vom Mittelpunkt M des Pumpenrades 5 - in einen anderen Sektor bzw. Bereich der Antriebseinheit verlagern und entsprechend das Volumen der Pumpen- und Motorkammern 12 bzw. 13 gegensinnig vergrößern bzw. verkleinern.

**Patentansprüche**

1. Regelbarer hydrostatischer Antrieb, insbesondere für die Nebenaggregate von Kraftfahrzeug-Brennkraftmaschinen, bestehend aus einer einen zwischengeschalteten exzentrischen Verstellring (6) aufweisenden, in einem gemeinsamen Gehäuse (1) radial ineinandergebauten Pumpen-/Motoreinheit mit gegensinnig einstellbarem Fördervolumen von Pumpe (2) und Motor (3), die strömungstechnisch miteinander verbunden sind, dadurch gekennzeichnet, daß eine die Pumpen-/Motoreinheit (2, 3) antreibende Welle (14) die Seitenscheiben (17) des Gehäuses (1) durchdringt und mit einem vorkragenden Ende (20) in einer das Wellenende (20) aufnehmenden, mit einem exzentrischen, sichelförmigen Bund (21) in eine in Umfangsrichtung verlaufende Ausnehmung (23) der Innenringfläche (10) des Verstellringes (6) eingreifenden Buchse (22) umläuft, und daß eine die Wellenendenbuchse (22) koaxial umschließende Außenbuchse (24) mit einer Nase (25) in eine radiale Nut (26) des Verstellringes (6) ragt.

2. Antrieb nach Anspruch 1, dadurch gekennzeichnet, daß die Nase (25) an der Stirnfläche der Außenbuchse (24) angeordnet ist.

3. Antrieb nach Anspruch 1 oder 2, gekennzeichnet durch eine Verdrehsicherung (27) der Wellenendenbuchse (22) und einen an der Außenbuchse (24) befestigten Verstellhabel (29).

4. Antrieb nach Anspruch 1 oder 2, gekennzeichnet durch eine Verdrehsicherung (27) der Außenbuchse (24) und einen an der Wellenendenbuchse (22) befestigten Verstellhebel (29).

5. Antrieb nach einem oder mehreren der Ansprüche 1 bis 4, dadurch gekennzeichnet, daß die Innenring- und die Außenringfläche (10 bzw. 7) des Verstellringes (6) einen entgegengesetzt exzentrischen Kurvenverlauf aufweisen.

**Claims**

1. A controllable hydrostatic drive, in particular for the auxiliary units of motor vehicle internal combustion engines, comprising a pump/motor unit in which the pump (2) and motor (3) are connected together hydrodynamically, have delivery volumes that are adjustable in opposite senses, are arranged radially one within the other in a common housing (1) and have an eccentric control ring (6) between them characterised in that a shaft (14) driving the pump/motor unit (2, 3) passes through the side plates (17) of the housing (1) and has a projecting end (20) that rotates in a bushing (22) that receives the end (20) of the shaft and has an eccentric, sickle-shaped shoulder (21) that engages in a recess (23) extending circumferentially in the inner annular surface (10) of the control ring (6), and that an outer bushing (24) that coaxially surrounds the shaft end bushing (22) has a lug (25) that projects into a radial groove (26) in the control ring (6).

2. A drive according to claim 1, characterised in that the lug (25) is arranged on the end face of the outer bushing (24).

3. A drive according to claim 1 or claim 2, characterised by locking (27) of the shaft end bushing (22) against rotation and by a control lever (29) fixed to the outer bushing (24).

4. A drive according to claim 1 or claim 2, characterised by locking (27) of the outer bushing (24) against rotation and a control lever (29) fixed to the shaft end bushing (22).

5. A drive according to any one or more of claims 1 to 4, characterised in that the inner and outer annular surfaces (10 and 7 respectively) of the control ring (6) have opposite eccentric curvatures.

**Revendications**

1. Dispositif de commande hydrostatique réglable, notamment pour les organes annexes des moteurs de combustion de véhicules automobiles, qui est constitué par une unité composée d'une pompe et d'un moteur engagés l'une dans l'autre dans le sens radial à l'intérieur d'une enveloppe commune (1) et comporte une bague de réglage excentrée (6) intercalée, les volumes de transport de la pompe (2) et du moteur (3), qui sont reliés de manière à permettre un écoulement, pouvant être réglés en sens contraires, caractérisé en ce qu'un arbre (14) qui entraîne l'unité (2, 3) composée d'une pompe et d'un moteur traverse les disques latéraux (17) de l'enveloppe (1) et tourne, an niveau d'une extrémité (20) en porte-à-faux, dans un boîtier (22) qui reçoit l'extrémité d'arbre (20) et s'engage, par un bourrelet excentré (21) en forme de croissant, dans un évidemment (23) ménagé, dans le sens périphérique, dans la surface intérieure (10) de la bague de réglage (6) et en ce qu'un boîtier extérieur (24) qui entoure coaxialement le boîtier (22) de l'extrémité d'anbre fait saillie, par un bec (25), dans une rainure radiale ménagée dans la bague de réglage (6).

2. Dispositif de commande selon la revendication 1, caractérisé en ce que le bec (25) se trouve au niveau de la surface avant du boîtier extérieur (24).

3. Dispositif de commande selon l'une des revendications 1 ou 2, caractérisé par un dispositif (27) du boîtier d'extrémité d'arbre (22) empêchant toute rotation et par un levier de réglage (29) fixé au boîtier extérieur (24).

4. Dispositif de commande selon l'une des revendications 1 óu 2, caractérisé par un dispositif (27) du boîtier extérieur (24) empêchant toute rotation et par un levier de réglage (29) fixé au boîtier d'extrémité d'arbre (22).

5. Dispositif de commande selon une ou plusieurs des revendications 1 à 4, caractérisé en ce que les surfaces intérieure et extérieure (10 ou 7 ) de la bague de réglage (6) comportent des tracés de courbes d'excentrique de sens inverses.

Fig.1

Fig. 2

Fig.3

Fig. 4